# EUROPEAN PATENT APPLICATION

(11) **EP 4 345 515 A1**
(43) Date of publication of application: **03.04.2024**
(21) Application number: 22198111.1
(22) Date of filing: 27.09.2022
(51) Int. Cl.: G02B 5/02, G02B 5/20, G02B 5/28

(54) **A POROUS LAYER THAT IS AT LEAST PARTIALLY TRANSPARENT TO IR LIGHT BUT WHICH HAS REDUCED TRANSMITTANCE FOR VISIBLE LIGHT**

(71) Applicant: Freshape SA, 1690 Villaz-St-Pierre (CH)
(72) Inventor: KUNG, Yen-Cheng, 1110 Morges (CH); LIU, Yuhang, 1024 Ecublens (CH); SOLER, David, 1024 Ecublens (CH); CHEN, Tonglai, 1350 Orbe (CH)
(74) Representative: Schneiter, Sorin

(57) **Abstract**

The present invention concerns a porous layer that is transparent to at least part of the spectrum of infrared light but that prevents most of the visible light from passing through the layer. The porous layer is preferably permeable to solvents, including water and organic solvents. The porous layer preferably comprises particles, spheres, wires, rods or porous base layer comprising a multilayer coating providing a Bragg reflective structure. The invention also concerns a device comprising the porous layer, the device being preferably selected from electrochemical, optoelectronic, photochromic, photoelectrochromic devices and from displays.

## Description

### Technical Field

The present invention generally relates to the field of light selectivity, in particular with respect to light transparency, and more specifically to materials that are comparatively more transparent to at least some infrared light, and comparatively less transparent to visible light. The invention further relates to a porous layer that is at least partially transparent to IR light but prevents at least some visible light from passing through the layer. The invention also concerns a device comprising the porous layer, in particular an electrical or electronic device and/or a display.

### Background Art and Problems Solved by the Invention

Materials that are selectively transmissive to certain wavelengths of electromagnetic radiation have been developed for various applications. In some contexts, materials that are more transparent to infrared light than to visible light have been proposed.

US 2017/0123122 discloses a color film intended for use as an infrared transmitting cover sheet to be positioned in front of a near-infrared photoelectric conversion device. One objective of this color film is to reflect a preselected color spectrum so as to display a predetermined color to the observer. The cover sheet comprises an interference multilayer, each layer of the stack having a different refractive index than the adjacent layer of the stack. The multilayer achieves light trapping of a portion of visible light in that it behaves like an optical waveguide. The layers that are transparent to IR light are continuous and impermeable to water. In some applications, such as certain electrochemical, optoelectronic and/or chromic devices, it would be advantageous to have a layer that is permeable to water, electrolytes and/or other liquids, as the case may be.

US 2019/008217A1 discloses a textile comprising a porous polyolefin, wherein the textile has pores and has a transmittance of infrared radiation at a wavelength of 9.5 µm of at least 40%. The size of the nanopores (about 50-1000 nm) is designed to scatter visible light for an opaque appearance but leaving mid-IR transmittance substantially unchanged. The textile of this reference is applicable to clothing but not suitable for other applications, such as electrochemical, optoelectronic and/or chromic devices. In some application, more inert and/or resistant materials are required. In view of this reference, a further objective of the present invention is to obtain a sharp change in the transmission spectrum within a relatively short wavelength range of about 100nm extending between visible and IR light. It is also an objective to provide a material that has comparatively high transmission in the near-infrared region.

US 2021/0087116 discloses nanocrystalline ceramic oxide beads which are visibly dark and infrared transmissive. The beads can be incorporated into base coat paints, clear coat paints, and automotive films, but in particular in pavement markings and vehicle coatings. The latter films are not permeable to liquids or solvents and, furthermore, when integrated in the paint, may have modified light absorbing properties.

US 2008/0316594 discloses dielectric multilayer film (ZrO₂ and SiOz) layers that are transmissive to IR light. These layers may be used for remote controls. As with other documents cited above, these materials are not porous and are not useful in situations where permeability to solvents is required.

It is an objective of the invention to provide a porous layer that is transparent to at least a portion of infrared light but which is not transparent to at least some but preferably all visible light.

It is an objective of the invention to provide a porous layer that is transparent to at least a portion of infrared light but which is reflective to at least some but preferably all visible light.

It is an objective of the invention to provide a porous layer exhibiting light transmitting and reflecting properties showing minimum dependance on the light incident angle.

It is an objective of the invention to provide a porous layer exhibiting diffuse reflection in at least some but preferably all visible light.

It is an objective of the invention to provide a layer that is permeable to solvents and that can be integrated in electrochemical, optoelectronic, chromic devices and/or displays, or other devices.

It is an objective of the invention to provide a material having the properties described above, and which can be relatively thin, for example thinner than 500 µm, preferably thinner than 200 µm.

It is also an objective to provide a layer exhibiting higher transparency to IR light than to most of the visible light and which is unreactive in presence of redox-active species and/or organic solvents and/or water.

The present invention also seeks to provide light-driven or light-controlled devices comprising a light-sensitive material, such as a photosensitive electrode, a photochromic and/or a photoelectrochromic material.

Further objectives and problems addressed by the present invention will become apparent from the description from the aspects and embodiments of the invention herein below.

### Summary of the Invention

In an aspect, the invention provides a porous layer, which reflects and/or absorbs at least some visible light, and which is transmissive and/or transparent to at least some of infrared light.

In an aspect, the invention provides a porous layer that exhibits selective transparency to IR light while being preferably less or not transparent to at least some visible light.

In an aspect, the invention provides a porous layer that prevents comparatively more photons of the visible spectrum having a wavelength of 350-750 nm from passing through the layer, while being transmissive to comparatively more photons of the infrared spectrum having a wavelength of 751-1400 nm.

In another aspect, the invention provides a porous layer which exhibits a selective transparency to light in that the porous layer prevents 60% or more of photons of light having a wavelength falling within a first continuous range lying within the visible light spectrum from passing through the layer; and, the porous layer is transparent to at least 60% of the photons of light having a wavelength falling within a second continuous range, said second continuous range lying within the infrared (IR) light spectrum.

In another aspect, the invention provides a porous layer which is selectively transparent to light in that the porous layer prevents 60% or more of photons of light having a wavelength falling within a continuous range of at least 100 nm extending within the visible light spectrum from passing through the layer; and, the porous layer is transparent to at least 60% of the photons of light having a wavelength falling within a continuous range of at least 5 nm extending within the infrared (IR) light spectrum.

In yet another aspect, the invention provides a device comprising the porous layer. Preferably, the device is selected from one or more selected from the group consisting of: a display, a screen, an electric device, an electronic device, an electrochemical device, a photoelectrochemical device, a photochemical and an optoelectronic device. In an embodiment, the device is a layered device comprising two, three, four or more superimposed layers. In an embodiment, the device is an overall flat device, comprising two main opposed surfaces or sides.

Further aspects and preferred embodiments of the invention are defined herein below and in the appended claims. Further features and advantages of the invention will become apparent to the skilled person from the description of the preferred embodiments given below.

### Brief Description of the Drawings

**Figure 1** schematically shows a porous layer and its properties on visible and IR light impinging on the layer in accordance with embodiments of the invention.
**Figure 2** schematically shows a porous layer and its permeability properties with respect to liquids, such as organic solvents, in accordance with an embodiment.
**Figure 3A** and **3B** schematically show a porous layer comprising substantially spherical particles according to an embodiment of the invention, and, respectively, an enlarged view of a single particle.
**Figure 4** schematically shows a porous layer comprising particles in a substantially flaked format or in the form of sheets in accordance with another embodiment.
**Figure 5** schematically shows a porous layer comprising a porous base layer coated with a multilayer in accordance with yet another embodiment.
**Figure 6A** is a schematic view of a porous base layer coated with a multilayer in accordance with another embodiment.
**Figure 6B** schematically shows the obtention of the layer shown in Fig. 6A.
**Figure 7** schematically shows a device comprising the porous layer according to an embodiment of the invention.

Hereinafter, preferred embodiments of the device of the invention are described, in order to illustrate the invention, without any intention to limit the scope of the present invention.

### Detailed Description of the Preferred Embodiments

The present invention relates to a porous layer that is transparent to at least some infrared (IR) light and that prevents at least some visible light from passing through the layer.

For the purpose of the present specification, visible light is light having a wavelength within the range of 350-750 nm, and infrared IR light is light having a wavelength within the range of 751-1'400 nm.

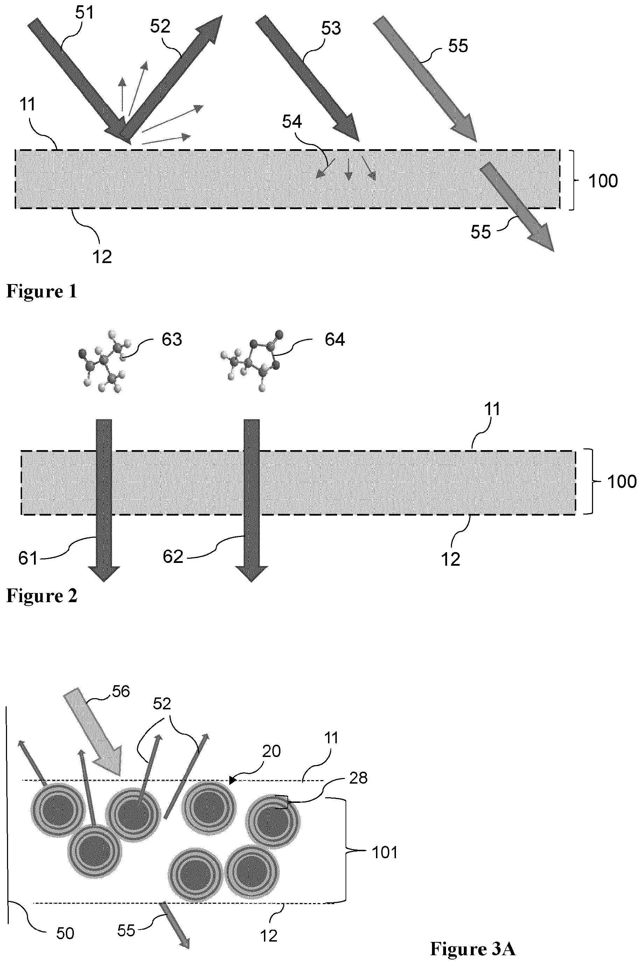

**Figure 1** schematically illustrates the selective transparency and non-transparency of the porous layer 100. The porous layer has two opposed main sides, which are here named first and second sides 11, 12 of the porous layer.

The porous layer of the invention may be flexible or rigid. In some embodiments, the porous layer is a film or sheet, having preferably a substantially constant thickness (±10%, preferably ±5% of variation) over its operational coverage. The first and second sides are preferably smooth on a macroscopic scale, but structured and/or porous on a microscopic and/or mesoscopic scale, for example. The porous layer may be flat and/or may extend in a plane, as shown in the figures. In other embodiments, the porous layer may at least partially extend in one or more selected from curved, curved, concave and/or convex surfaces.

Reference numeral 51 refers to visible light having a particular wavelength but is also considered to refer to visible light of different wavelengths. Reference numeral 52 is light that has the same wavelength of light 51 but has been reflected or backscattered by the porous layer 100, including diffusively reflected light (small arrows). Reference numeral 53 is also visible light, this time light 53 is absorbed by layer 100, as illustrated by reference numeral 54. Light 53 may have a different wavelength than light 51. Alternatively, light 53 is the same wavelength, such that Fig. 1 illustrates different embodiments of the porous layer 100, one embodiment in which visible length of a particular wavelength is reflected and another embodiment, where that visible light is absorbed. The present invention encompasses the two possibilities. In accordance with the invention, the porous layer prevents at least some visible light from passing through the layer. The present invention is preferably not limited with respect to the mechanism, for example reflection and/or absorption of the visible light, by which transmissibility is prevented. Accordingly, the porous layer is not, or not entirely, transparent to at least some visible light.

Arrow 55 represents IR light having preferably a particularly defined wavelength. Alternatively, arrow 55 refers to IR light (751-1'400 nm light, see above). The porous layer 100 is transparent to at least some IR light 55, illustrated by the arrow exiting the porous layer 100 at its second side 12.

In some embodiments, the properties of light transmissibility (the characteristics qualifying and/or the transmissiveness) outlined above are further defined in the preferred embodiments below and in most embodiments need not apply to all photons of light having a particular wavelength and/or to all wavelength of visible or IR light, respectively.

In an embodiment, the porous layer prevents 50% or more of photons of light having a wavelength falling within a continuous range of at least 100 nm extending within the visible light spectrum from passing through the layer. Preferably, the continuous range is a range of at least 150 nm, more preferably at least 200 nm, even more preferably at least 250, and most preferably at least 300 nm. The continuous range preferably lies entirely within the spectrum of visible light. For example, the continuous range of at least 100 nm may be visible light included in the wavelength range of 350-450 nm wavelength, 400-500 nm, 450-550, 600-700 nm or 700-750 nm wavelength. A range of at least 150 nm may be the range including light having wavelengths of 350-500 nm, 400-550, 450-600, 500-650, 550-700, or 600-750 nm, for example. Of course, other ranges are also possible such as 410-510 as an exemplary range of at least 100nm or 430-580 as an exemplary range of at least 150 nm. Furthermore, these minimum ranges do not exclude the possibility that light is prevented from passing through over a larger range.

Preferably, said continuous range, which is also referred to as the first continuous range, lies entirely within the wavelength range covered by visible light as defined in this specification.

Furthermore, in some embodiments, the porous layer is not entirely obstructive to the visible light as defined above. In an embodiment, the porous layer prevents 60% or more of the photons of the defined visible light go through, more preferably 70% or more, even more preferably 80% or more, and most preferably 90% or more. These percentages apply independently to the ranges of visible light as defined above, thereby including various combinations, some of which are provided below.

In an embodiment, the porous layer prevents 60% or more of the photons of a continuous range of at least 100 nm as defined from passing through the layer. Preferably, 70% or more of the photons of said range of at least 100 nm are prevented from passing through, more preferably 80%, and most preferably 90%.

In an embodiment, the porous layer prevents 60% or more of the photons of a continuous range of at least 150 nm as defined from passing through the layer. Preferably, 70% or more of the photons of said range of at least 150 nm are prevented from passing through, more preferably 80%, and most preferably 90%.

In an embodiment, the porous layer prevents 60% or more of the photons of a continuous range of at least 200 nm as defined from passing through the layer. Preferably, 70% or more of the photons of said range of at least 200 nm are prevented from passing through, more preferably 80%, and most preferably 90%.

In some embodiments, the porous layer may comprise one or more regions and/or one or more gaps where visible light may pass through the layer at percentages above the above values, for example more than 50% or more than 60%. For example, the porous layer may exhibit the indicated lack of transmission with respect to two separate wavelengths and/or wavelengths ranges as defined above. Accordingly, the porous layer prevents photons having a wavelength within a range (a) and photons lying within a range (b) from passing through the layer at more than 60%, but may be more transmissive to photons having a wavelength that lies outside of ranges (a) and (b), for example between ranges (a) and (b). In such situations, as described elsewhere in this specification, the device of the invention preferably comprises a filter and/or reflector for preventing light outside ranges (a) and (b) from entering the device.

IR light has been defined above, for the purpose of the present specification, to refer to all light having a wavelength encompassed by the range of 751-1'400 nm. Light having a wavelength larger than 1'400nm is not considered for the purpose of the present invention, meaning that the present invention does not impose any properties or limitations on the porous layer regarding the transmissiveness of light having wavelengths larger than 1'400nm.

In a preferred embodiment, the present invention is particularly concerned with IR light encompassed by the range of 751-1'200 nm. According to this particular embodiment, the light having a wavelength of 1'201-1'400 nm is not concerned by the features of the present invention, e.g. the features related to transmissiveness, meaning that the invention does not impose any properties or limitations on the porous layer regarding the transmissiveness of light having wavelengths larger than 1'200 nm. Further in accordance with this embodiment, the ranges given in columns D of Tables 1 and 2 and the ranges of IR light defined for other embodiments disclosed in this specification (e.g. 5, 10, 15, 30, 40, 50, 60, 70, 80 and 100nm ranges or the percentages of transmissiveness to photons) for example herein below, are selected entirely as part of the overall range of 751-1'200 nm.

In an embodiment, the porous layer is transparent to at least 60% of the photons of light having a wavelength falling within a continuous range of at least 5 nm extending within the infrared (IR) light spectrum. Preferably, the continuous range is a range of at least 10 nm, more preferably at least 15 nm, even more preferably at least 30, and most preferably at least 40 nm, for example at least 50 nm, at least 60, 70, 80 and most preferably at least 100 nm.

The continuous range preferably lies entirely within the spectrum of IR light as defined in this specification. For example, the continuous range of 5 nm may be IR light having a wavelength of 751-756 nm, 770-775 nm, 780-785 nm, 790-795, or 795-800 nm wavelength, for example. A range of at least 10 nm may be the range including light having wavelengths of 770-780, 780-790, 790-800, 800-810, 810-820, 820-830, 830-840, 840-850, 850-860, 860-870, 880-880, ...., 1'190-1'200, ... ,1'390-1'400 nm, for example.

A range of at least 15 nm may be the range including light having wavelengths of 751-766, 760-775, 770-785, 785-800, 800-815, .... 1'175-1'190 nm, for example.

Preferably, said continuous range, which is also referred to as the second continuous range, lies entirely within the wavelength range covered by IR light as defined herein.

Furthermore, in some embodiments, the porous layer is not entirely transparent to the IR light as defined above. In an embodiment, the porous layer is transparent so that 60% or more of the photons of the defined IR light go through, more preferably 60% or more, even more preferably 70% or more, and most preferably 80% or more. These percentages independently apply to the ranges of IR light as defined above.

Below, some embodiments concerning the transparency or transmissiveness within a continuous range of IR light as defined in this specification are provided.

In an embodiment, the porous layer is transparent to 60% or more of the photons of a continuous range of at least 5 nm as defined. Preferably, 70% or more of the photons of said range of at least 5 nm can pass through, more preferably 80% or more, and most preferably 90% or more.

In an embodiment, the porous layer is transparent to 60% or more of the photons of a continuous range of at least 10 nm as defined. Preferably, 70% or more of the photons of said range of at least 10 nm can pass through, more preferably 80% or more, and most preferably 90% or more.

In an embodiment, the porous layer is transparent to 60% or more of the photons of a continuous range of at least 15 nm as defined. Preferably, 70% or more of the photons of said range of at least 15 nm can pass through, more preferably 80% or more, and most preferably 90% or more.

In an embodiment, the porous layer is transparent to 60% or more of the photons of a continuous range of at least 30 nm as defined. Preferably, 70% or more of the photons of said range of at least 30 nm can pass through, more preferably 80% or more, and most preferably 90% or more.

In an embodiment, the porous layer is transparent to 60% or more of the photons of a continuous range of at least 50 nm as defined. Preferably, 70% or more of the photons of said range of 50 nm can pass through, more preferably 80% or more, and most preferably 90% or more.

In an embodiment, the porous layer is transparent to 60% or more of the photons of a continuous range of at least 70 nm as defined. Preferably, 70% or more of the photons of said range of at least 70 nm can pass through, more preferably 80% or more, and most preferably 90% or more.

Various combinations of ranges of visible light (VIS) substantially prevented from passing and ranges if IR light that may pass are encompassed by the present invention. For example, the VIS range of at least 100 nm may be combined with any one of said IR ranges selected from at least 5, 10, 15, 30, 40, 50, 60, 70, 80 and100 nm.

Said VIS range of at least 150 nm may be combined with any one of said IR ranges selected from at least 5, 10, 15, 30, 40, 50, 60, 70, 80 and 100 nm.

Said VIS range of at least 200 nm may be combined with any one of said IR ranges selected from at least 5, 10, 15, 30, 40, 50, 60, 70, 80 and 100 nm.

Said VIS range of at least 250 nm may be combined with any one of said IR ranges selected from at least 5, 10, 15, 30, 40, 50, 60, 70, 80 and 100 nm.

Said VIS range of at least 300 nm may be combined with any one of said IR ranges selected from at least 5, 10, 15, 30, 40, 50, 60, 70, 80 and 100 nm.

Furthermore, combination of percentages of photons prevented from passing in the visible range as defined and of photons in the IR range that may pass through the porous layer may also be combined, in particular with the specified ranges.

**Tables 1** and **2** further below specify some embodiments encompassed by the invention. Column A refers to the particular embodiment (embodiment number). Column B is the breadth in nanometers of the minimum range in the visible spectrum as defined herein, in which a certain minimum percentage of photons, indicated in column C, is prevented from passing through the porous layer. Column D is the breadth in nanometers of the minimum range in the IR spectrum as defined herein, in which a certain minimum percentage of photons, indicated in column E, can pass through the porous layer. Table 1 covers the visible light ranges of at least 100, 150 and 200 nm, where the indicated minimum percentage of light does not pass through the layer, and Table 2 covers the visible light ranges of at least 250, 300 and 350 nm.

In an embodiment, the porous layer of the invention exhibits a relatively sharp change in transmittance within a relatively short wavelength range at the transition between visible and IR light. In an embodiment, the change of transmittance is at least 40% of photons, preferably at least 50% of photons, within a range of not more than 200 nm at the transition between visible and IR light. Preferably the range is even shorter, such as 150 nm or less or even 100 nm or less. This transition is considered to cover the wavelengths of 650-850 nm. For example, there is a change in transmittance of at least 40% within the range of 650-750 nm or within the range of 700-800nm. For example, only 30% of photons with a wavelength of about 650nm pass through the porous layer, while 80% of the photons having a wavelength of 750 nm pass through the porous layer. In this example, there is a change in transmittance of 50% over a range of 100 nm or less. The change in transmittance in percent is therefore preferably relatively abrupt over a relatively short range of light, such as 100 nm.

The above indicated values (in particular percentages) related to the transparency and/or reduced transparency, as applicable, preferably relate to light that is normal to the overall plane in which the layer 100 is provided. In Fig. 1, the overall plane corresponds to the first side or surface 11 of layer 100. Such light would have an incident light angle of 0°. Preferably, the indicated values apply to light impinging on the porous layer with an incident light angle that is larger (or smaller) than 0°, too, as is illustrated, for example, by the direction of the arrows 51, 53 and 55 in Figure 1. Preferably, the above values also apply to light having an incident light angle of ±15°, more preferably ±25°, even more preferably ±30°, and most preferably ±40° with respect to normal. Even more preferably, the above values apply in all or nearly all incident light having a wavelength lying within the corresponding wavelength range of visible or IR light respectively.

Surprisingly, the invention provides a porous layer exhibiting light transmitting and reflecting properties showing minimum dependance on the light incident angle. For example, a difference in transmittance of less than 50% is obtained with incident light angles varying ±25°.

The transmittance of visible and IR light having a particular wavelength or extending over a wavelength range can be determined by using a light source and a light intensity sensor, obtaining a reference value by emitting light and determining the signal from the sensor so as to obtain a reference value, and, once a reference value is obtained, placing the porous layer in the light path between the light source and the sensor so as to obtain a measurement signal, which can be compared to the reference value to determine transmittance.

In a preferred experimental setting, a light source, optical fiber for directing the light towards the sample (or sample holder) and from the sample holder to the sensor, a collimator lens to provide a non-disperse beam, sample holder and spectrometer as a sensor is used. The measurement type is preferably provided for in-line transmission (RIT), and the light preferably has an incident light angle of 0 or close thereto (normal to the sample, in particular to surface 11). For measuring the dependence of transmittance to incidence light angle, a proper holder set-up is required to fix the angle between incident light and plane of sample surface. For a sample layer exhibiting scattering, an integration sphere should be used to collect the total transmitted light before forwarding the signal to the light sensor. For more details, one could use Spectrophotometry - Accurate Measurement of Optical Properties of Materials (ISBN: 978-0-12-386022-4)

The percentage of photons of a given wavelength that is prevented from passing through the porous layer corresponds to the corresponding reduction of the percentage of the light intensity. For example, if the measured intensity of light passing through the porous layer is reduced by 50%, this is equivalent to 50% of photons having been prevented from passing through the layer.

In an embodiment, the porous layer is porous. The porosity is preferably such that the layer is not a complete obstacle to a liquid, in particular a solvent. Accordingly, such a liquid can pass through the porous layer, for example by diffusion. Preferably, the porous layer is permeable.

In an embodiment, the permeability of the porous membrane is larger than 0 Darcy, preferably larger than 0.25 Darcy, even more preferably larger than 0.5 Darcy. Most preferably, the permeability is larger than 0.75 and even larger than 1 darcy. "Darcy" is a practical unit of permeability. A porous material has permeability equal to 1 Darcy if a pressure difference of 1 atm will produce a flow rate of 1 cm³/sec of a fluid with 1 cP viscosity through a cube having side 1 cm in length.

In a preferred embodiment, the porous layer is permeable to one or more solvents, in particular organic solvents and/or water. Exemplary solvents are selected from one, two, more or all selected from the group of: water, propylene carbonate, ethylene carbonate, tetrahydrofuran, dioxane, dimethyl sulfoxide, dimethylformamide, acetonitrile, sulfolane, and γ-butyrolactone. Preferably, the solvent is liquid at room temperature (25°C), and the permeability applies at least to RT.

The permeability thanks to the porosity of layer 100 is illustrated in **Figure 2****.** Solvent molecules 2-methylpropanal (isobutyraldehyde) 63 and propylene carbonate 64 are shown to pass through layer 100, preferably more or less unhinderedly, as illustrated by arrows 61 and 62, respectively. Preferably, liquid or solvent molecules having a molecular weight of up to 600, more preferably up to 650, even more preferably up to 700, and most preferably up to 800 may pass through the porous layer.

In an embodiment, the permeability is thanks to pores provided in the porous layer, which pores preferably have an opening size having an average diameter of 1 nm to 50 µm, most preferably 5 nm to 10 µm and even more preferably 20 nm to 1 µm. Preferably, the porous layer comprises pores that connect the two opposing sides 11 and 12 of the porous layer. Preferably, said pores enable a communication between the regions exposed to the two opposing main sides 11, 21 of the porous layer.

The porous layer has preferably a thickness of 50 nm to 1 mm, preferably 50 nm to 600 µm, more preferably 70 nm to 500 µm, even more preferably 90 nm to 400 µm. In an embodiment, the thickness in 50 nm to 500 µm.

In preferred embodiments, the thickness of the porous layer is 500 nm to 500 µm, preferably 600 nm to 400 µm, more preferably 700 nm to 350 µm, and most preferably 800 nm to 300 µm. Even more preferably, the porous layer has a thickness of 1-250 µm, preferably 2-100 µm, most preferably 5-50 µm.

As mentioned elsewhere in this specification, the thickness is preferably a substantially constant thickness (±20%, preferably ±10% of variation) within a range of thickness as indicated herein, preferably when considering the functional area of the porous layer.

In accordance with an embodiment, the features related to selective transparency described above may be provided by the presence of a multilayer, preferably a plurality of layers enabling interference, preferably constructive interference and/or Bragg reflector properties. Said interference is preferably due to the Bragg reflector properties of the porous layer and in particular of said multilayers comprised in said porous layer.

In a preferred embodiment, the multilayer provides one or more selected from a Bragg reflector, a distributed Bragg reflector, Bragg mirror, and a dielectric mirror. The term "Bragg reflector" is generally used to refer to any one of the aforementioned. Such structures enable selective reflectivity with respect to certain wavelengths or wavelengths ranges.

Preferably, the property of a Bragg reflector applies in particular to visible light as defined, whereas the porous layer does not exhibit, or to a lesser extent, Bragg reflector properties for the IR light as defined.

On the other hand, the feature related to porosity as defined preferably stems from the fact that the porous layer is based on particles and/or on a porous base layer, wherein said porous base layer and/or said particles comprise said multilayer providing the selective transparency described herein.

In an embodiment, the porous layer of the invention comprises one or both selected from: particles 20, preferably micro- and/or nanoparticles, more preferably sintered micro- and/or nanoparticles; and, a porous base layer 30 and a coating 28.

**Figure 3A** illustrates a porous layer 101 comprising and preferably consisting essentially of particles 20. Several, many, most and preferably all particles of the porous layer 101 are multilayer particles and/or comprise a multilayer 28.

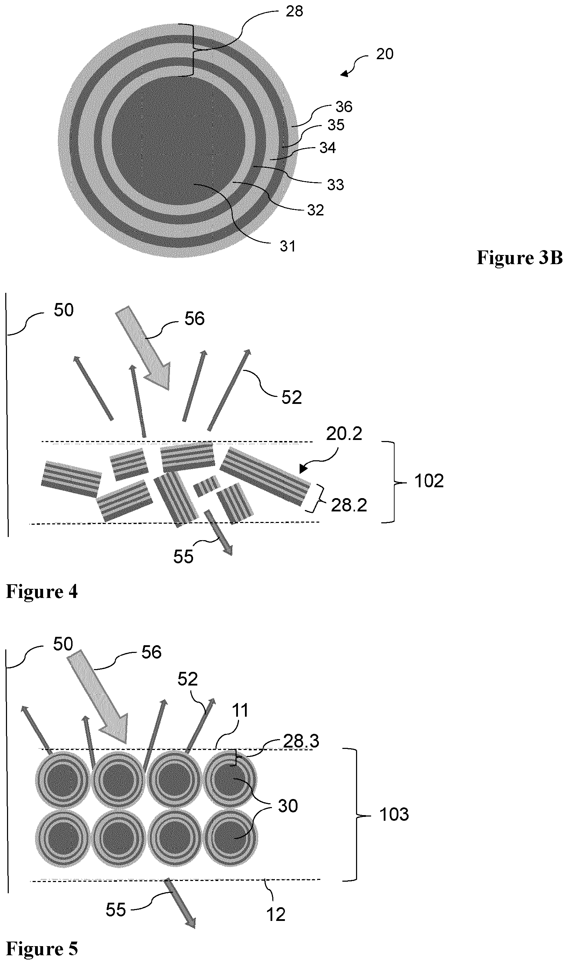

As better visible in **Figure 3B****,** a particle 20 comprises a core 31, and additional layers 32, 33, 34, 35, 36 formed one on top of the other around said core. In the embodiment as shown, the core 31 is considered as being part of the multilayer, but, in another embodiment may also be considered as being separate from the multilayer 28.

The particles 20 comprising the multilayer 28 preferably exhibit interference, preferably constructive interference, in particular with the visible light as defined elsewhere in this specification. Preferably the particles exhibit Bragg reflector properties. As illustrated in Fig. 3A, incident light 56 comprises visible 51 and IR light 55 as defined elsewhere in this specification. The visible light 51 is absorbed, scattered and/or reflected as light 52, preferably by the multilayer functioning as a Bragg reflector. IR light 55 passes through the porous layer 101.

The multilayer 28 preferably comprises layers 31-36 providing interference, functioning preferably as a Bragg reflector.

Preferably a first layer 31 (or core) comprises a material that is different from the second layer 32 which is the most adjacent or the closest neighbour of the first layer 31 towards the inside of the particle. One may say the first layer 31 comprises or consists essentially of a first material, and the second layer 32 comprises or consists essentially of a second material, wherein said first and second materials are different. Preferably, said first and second materials have different refractive indexes. For example, said first and second materials have different elementary composition and/or a different chemical structure.

A third layer 33 is preferably provided outwardly of said second layer 32. The second layer 32 is the closest inward layer of the third layer. The third layer 33 preferably comprises a material that is different from the second material comprised in the second layer. In an embodiment, the third layer may comprise the same material as the first layer, or yet a third material that is different from both, said first and second material.

The particles 20 preferably comprise two or more layers, preferably three, four, five, six or more layers. In an embodiment, the multilayer 28, preferably comprises four or more layers and most preferably five or more layers.

Generally, an additional layer no. y=x+1 is preferably provided so as to have a closest inner neighbouring layer no. x that comprises a material having a refractive index that is different from the refractive index of the material of the additional layer y. For example, a fifth layer (y=5) comprises a material that is different from the material of the fourth layer (x=4). Preferably, x is an integer starting with 1 and increasing one by one so as to correspond to the number of a particular layer of a multilayer. For example, the core would be the first layer (x=1). Y stands for any layer that has layer x as its closest inner neighboring layer. Z may be the total number of layers in the multilayer, such that z may be 20, 15, 10, 8, 7, 6, 5, 4, for example.

In case of flake-like particles (see below), the first layer may not be a core but may better be described as a bottom (or top) layer. In this particular situation, one may consider any one of the two outmost layers (bottom or top) as being the first layer, and the outmost layer at the opposed side as layer z.

In principle, the particles can thus be made with basically two different, first and second materials, which are alternatingly deposited one atop another so as to form said multilayer. This is the principle shown in Figs 3A and 3B.

Put in other words, the porous layer preferably comprises particles 20, each of which comprises a plurality of superimposed layers 31-36, wherein a given layer 33 of a particle has one, two, or possibly more closest neighboring layers 31, 32, and wherein a material of said given layer 33 has a refractive index that is different from the refractive index of another material of at least one and possibly more of said one, two or more closest neighboring layers 31, 32. In case of two adjacent or directly neighboring layers (in case of the inner layers, such as layers 32-35 in Fig. 3B, the two directly neighboring layers may comprise the same material or different materials. If they comprise different materials, this implies that the multilayer comprises at least three different materials. In generally, as the multilayer can in principle be realized with two different materials (e.g. SiOz and TiOz), this situation is preferred to using three or more materials for reasons of convenience and/or simplicity.

Preferably, the layers of the multilayer 28 may be nanolayers, sublayers and/or individual layers 31-36. In case there is a core, this core may not be a nanolayer, sublayer and/or sublayer, but is still considered as a layer. Said layers preferably comprise and/or consist of materials having different refractive indexes, in particular at least two different materials.

Layers other than said core 31 may have a thickness in the range of a few nanometers to several micrometers. In an embodiment, the layers, preferably other than the core, have a thickness in the range of 10 nm to 1 µm, preferably 20 nm to 200 nm, more preferably 30 nm to 100 nm. These thicknesses preferably refer to the maximum thickness of the layers, as the layers may comprising regions where they are thinner. In case there is a core 31, the above values preferably apply to the diameter of the core.

In an embodiment, the multilayer 28 comprises and/or essentially consists of 2-50 layers, preferably 4-15 layers, even more preferably 5-10 layers. These numbers preferably include the inner core in case the particles are provided in a core-shell structure as shown in Figs 3A and 3B. The layers of the multilayer may also be referred to as sublayers, individual layers or may also be nanolayers. They are preferably separate layers. Preferably, the individual layers of the multilayer do at least partially overlap with one or two adjacent layers. Preferably, an individual layer overlaps over the major part of its area with one or two adjacent layers.

Preferably, each layer is in contact with its inwardly closest or adjacent neighbor. There may be a single area of contact, or a given layer (e.g. layer no y=x+1) may be wholly deposited onto the inner, adjacent or lower adjacent neighbor (e.g. layer no. x).

Materials having the desired properties and which can be used for preparing the porous layer may be selected from a large number of different materials. The materials that can be used are preferably stable under the particular conditions in which the porous layer is used. For example, the material is preferably stable when used in an electrolyte and/or when subjected to a heat treatment, such as sintering and/or annealing. Preferably, the material does not absorb much light or absorbs the light with designed specific wavelength or wavelength range located in the visible light spectrum depending on the application requirement. Preferably, the material is a solid at RT and more preferably within the temperature range of 20-150°C, more preferably at 15-250°C, and most preferably at 0-450°, and even up to 600°C.

In an embodiment, the materials (said first, second and if applicable, third and more materials) are selected from oxide, sulfide, fluoride, nitride, arsenide, selenide, bromide, chloride and iodide materials, and from organic materials, preferably polymers.

In an embodiment, said oxide, sulfide, fluoride, nitride, arsenide, selenide, bromide, chloride and/or iodide materials are selected from alkali, alkaline earth, transition metal, post transition metal, metalloid, and lanthanide oxides, sulfides, fluorides, nitrides, arsenides, selenides, bromides, chlorides and/or iodides and combinations of the cited oxides, sulfides, fluorides, nitrides, arsenides, selenides, bromides, chlorides and/or iodides. Preferably, the material comprises and/or essentially consists of one of these materials and/or one or more polymers.

In an embodiment, the materials are selected from Ti, Si, Mg, Ta, Zn, Al, Ge, Hf, Mo, W, Zr, Ca, Ba, Li, Sn, Cd, Pb, Ga, In, B oxide, sulfide, fluoride, nitride, arsenide, selenide, bromide, chloride and/or iodide materials, and/or and from organic polymers.

In an embodiment, the materials are selected from Ti, Si, Mg, Ta, Zn, Al, Ge, Hf, Mo, W, Zr, Ca, Ba, Li, Sn, Cd, Pb, Ga, In, B oxide, sulfide, fluoride, and nitride, materials, and/or and from organic polymers.

In an embodiment, the materials are selected from Ti, Si, Mg, Ta, Zn, Al, Ge, Hf, Mo, W, Zr, Ca, Ba, Li, Sn, Cd, Pb, Ga, In, B oxide materials. In another embodiment, the materials are selected from Ti, Si, Mg, Ta, Zn, Al, Ge, Hf, Mo, W, Zr, Ca, Ba, Li, Sn, Cd, Pb, Ga, In, B sulfide materials. In yet another embodiment, the materials are selected from Ti, Si, Mg, Ta, Zn, Al, Ge, Hf, Mo, W, Zr, Ca, Ba, Li, Sn, Cd, Pb, Ga, In, B fluoride materials. In still another embodiment, the materials are selected from Ti, Si, Mg, Ta, Zn, Al, Ge, Hf, Mo, W, Zr, Ca, Ba, Li, Sn, Cd, Pb, Ga, In, B nitride materials.

In an embodiment, the materials are selected from TiOz, SiOz, MgF₂, Ta₂O₅, ZnS, Al₂O₃, GeOz, HfOz, MgO, ZnO, MoO₃, WO₃, ZrOz, CaF₂, MgF₂, BaF₂, LiF, ZnS, SnS, CdS, PbS, MoS₂, GaAs, AlAs, Si₃N₄, InN, GaN, AlN, TiN, BN, and from polymers.

The inorganic materials may be crystalline materials.

In an embodiment, one or more of said materials may be or comprise a metal. This preferably applies when the particles or porous base layer are provided to exhibit a color. This may also apply to just a portion of the particles.

For obtaining the type of substantially spherical particles as disclosed in Figs 3A and 3B, one may follow a modified version of the procedure disclosed in Suim Son et al "Designed synthesis of SiOz/TiOz core/shell structure as light scattering material for highly efficient dye-sensitized solar cells", ACS Appl. Mater Interfaces, 2013, 5, 11, 4815-4820. This article discloses core-shell particles in which a TiOz shell is deposited onto a SiOz core. This procedure may be modified by depositing a further SiOz layer on top of the TiOz layer, followed by a further TiOz layer, so as to obtain four layers, including the core. The sequence of depositing alternating layers may be further repeated, so as to obtain particles having any desired number of layers, for example from 4-20 layers.

Another procedure for obtaining substantially spherical particles comprising a multilayer structure is a modified version of the procedure disclosed in Shunxing Li et al, "Synthesis of the double-shell anatase-rutile TiOz hollow spheres with enhanced photocatalytic activity", Nanoscale, 2013, 5, 12150. In this article, the authors produced SiOz-TiOz-SiOz-TiOz particles having an average size (diameter) of about 300 nm. In this publication, the SiOz layers were subsequently removed by etching, so as to obtain hollow spheres, which may not be necessary for the purpose of the present specification. For the purpose of the present invention, one may envisage SiO₂-TiO₂-SiO₂(-TiO₂-SiO₂)_{K} with K being an integer of 1 to 10, or SiO₂-TiO₂(-SiO₂-TiO₂)_{L} particles L being an integer of 1 to 10, preferably 2-10, for example.

Figures 3A and 3B show substantially spherical particles to be present in the porous layer 101. The invention is not limited with respect to the form of the particles, including tubular, rod, sheet-like (e.g. nanosheets), columns (e.g. nanocolumns) flakes, flake-like, non-spheric and other forms of particles may be used. In **Figure 4****,** the porous layer 102 comprises flake-type particles 20.2, the particles comprising and/or consisting of a multilayer 28.2. The flake-type particles may be obtained by depositing a flat and continuous multilayer structure, in particular an interferential multilayer structure, for example as disclosed in US 2017/0123122, and then to mill, grind or otherwise reduce to particles from the flat and continuous multilayer structure so as to obtain a particulate composition. As described with respect to Fig. 3A, incident light 56 may comprise visible light 51, which is prevented by the particles 20.2 from passing through the porous layer 102, and which is reflected as reflected visible light 52, or which is otherwise prevented from passing through the porous layer 102, for example by absorption in the porous layer. In contrast, IR light 55 is substantially not influenced by the multilayer structure 28.2 of the flake-like particles and can pass through the porous layer.

A porous layer in accordance with the invention may be formed by depositing a film comprising the particles 20 or 20.2, wherein the film may further comprise a binder and a suitable solvent for facilitating the deposition of a film. The thickness of the film that is deposited is preferably adjusted so that a porous substrate having the desired thickness and light transparency property/selectivity is obtained at the end. The deposited film may be exposed to heat treatment, in particular annealing or sintering, for removing the solvent, optionally burning the binder and obtaining a porous layer substantially formed by annealed particles. Annealing temperature and time are preferably selected depending on the physical properties of the particles.

In a preferred embodiment, the particles forming the porous layer 100 do not form a monolayer of particles. Preferably, the particles are not all aligned on a smooth and/or flat surface so as to form side-by side arranged particles. As illustrated in Fig. 3A, the particles are preferably provided in said porous layer 100, 101 so as to be one or more selected from on top of each other, superimposed, overlapping and/or provided in a mixture of particles that extends in all three dimensions of space, preferably also along a direction that is vertical to the two opposed main surfaces 11, 12 of the porous layer. Accordingly, the thickness of the overall porous layer 101 preferably exceeds the diameter of the individual particles contained on the porous layer, or from which the porous layer was formed. The thickness of the porous layer is preferably determined along a vertical axis 50 of the porous layer as shown in Fig. 3A, corresponding to the shortest distance connecting the two opposed main surfaces 11 and 12 of the porous layer. Axis 50 is preferably normal to the upper surface 11 and/or to the plane or surface in which the porous layer extends. The porous layer preferably comprises particles placed at least partly on top of other particles and/or supported by other particles, such that the thickness of the porous layer is increased due to the piling and/or heaping of particles within the porous layer, the particles thus extending in all three dimensions as mentioned above.

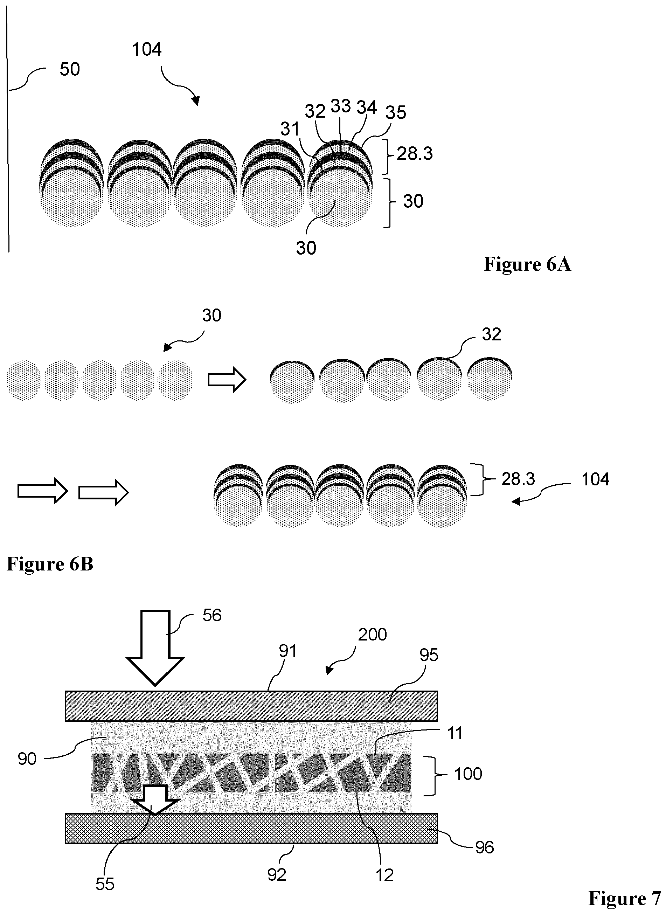

**Figure 5** and **6A** disclose a porous layer 103, 104 comprising a coated porous base layer 30. In accordance with this embodiment, a porous base layer 30 is provided first, and suitable layers 31-35 are deposited one after the other directly onto the porous base layer 30, according to the process illustrated in **Figure 6B****.** The layers so deposited preferably form a coating forming a multilayer 28.3 that was preferably deposited on the porous base layer. The resulting porous layer 103, 104 preferably retains at least some of the porosity of the original porous base layer 30 and, thanks to the multilayer, exhibit the diffraction properties required to prevent at least some visible light, preferably as defined herein, from passing through the layer. This is illustrated by the arrows in Fig. 5, which have the same meaning as in Figs 3A and 4.

It is noted that properties of the porous layers 103, 104, the individual layers and of the multilayer, in particular the thickness and the number of individual layers, is the same as described above with respect to the substantially spherical particles. As with the particles 20, the porous base layer 30 may also be considered as the first layer of the multilayer, in particular for the purpose of the total number of layers (z) as defined in this specification.

Having discussed various possibilities of providing a multilayer 28, 28,2, 28,3 as part of the porous layer of the invention, it is noted that the number of individual layers in the multilayer required to achieve the desired effect on transmittance may depend on the form or type of particles 20, 20.2 and the use (or not) of a porous base layer 30. In the case of substantially spheric particles, two individual layers with different materials may be sufficient, in addition to the core, such that the multilayer may consist of only two layers, but may of course comprise more layers, for example 2-50 layers, for example. In case of flake-like particles, three individual layers may be sufficient, such that the multilayer 28.2 may comprise three or more layers, for example 3-50 layers. In the case of a porous base layer 30, a multilayer 28.3 with four or more layers, for example 4-50 individual layers. There is in principle no particular upper limit with respect to the number of layers in the multilayer, but for reducing manufacturing costs and/or complexity, the multilayer preferably comprises not more than 50, preferably not more than 20, more preferably not more than 15, and most preferably not more than 10 individual layers.

Having Bragg reflector properties provided by particles or a porous layer according to the invention provides the advantage that the transmission/reflection spectrum is less dependent on the light incident/observing angle. For example, in Figure 3B, the Bragg reflector multilayer forms a concentric circles structure at its cross-section plane; therefore, light with different incident angles would experience the same effect of the Bragg reflector multilayer. For the particle in flakes format as in Figure 4, the orientation of the flakes in the porous film body is randomly distributed; therefore, the incident light would experience a collective effect of a group of randomly distributed flakes. As a result, the transmission/reflection properties of the porous film is less dependent on the incident light angle.

A further advantage of using particles, either spherical or non-spherical, or a porous layer, to provide a Bragg reflector is that it allows to achieve the effect of a Bragg reflector in a more cost-efficient way. Generally, the reflectivity and the wavelength selectivity of a Bragg reflector largely depends on the number of layers. The effect is more prominent with higher numbers of layers. Usually, it is time consuming to deposit a multilayer of thin films. By using the method of a particle-based Bragg reflector in accordance with preferred embodiments of the present invention, Bragg reflector properties can be implemented with a smaller number of layers. As the final porous layer preferably comprises overlapping particles, the incident light "sees" effectively a larger number of layers than a single particle has. Some embodiments of the invention therefore reduce the time and process to deposit a multilayer thin film functioning as a Bragg reflector.

Another distinct feature of this invention compared to conventional Bragg reflector is the diffusive reflection property. Prior art Bragg reflectors typically have a smooth surface, such that the light is in principle reflected similar to a specular reflector, which means that the angle of the incident light is equal to the angle of the reflected light. In some preferred embodiments, the present invention creates a non-smooth/scattering surface in micro- and/or nano-meter scale, thereby providing a diffusive reflective surface, preferably having a white and/or clear appearance.

A typical, prior art Bragg reflector provides the function of wavelength selective reflectivity. In the context of the present invention, the Bragg reflector achieves at least the partial blocking of visible light. If there is a requirement of blocking visible light by way of absorption, organic dyes or visibly non-transparent inorganic particles can be dispersed within the porous layer 101, 102, 103 and 104, or provided above or below the Bragg reflector particles 20 and 20.2, for example. Colored particles or organic molecules can also be embedded in the porous base layer 30. The optional presence of colored particles allows the adjustment or the complementing of the visible light blocking properties of the porous layer, which may thus include a plurality of different mechanisms of preventing the visible light from passing through the porous layer, such as Bragg reflection and light absorption, for example.

An alternative to different particles would be to use materials with absorption in the visible light region for constructing the multilayer in Bragg reflector particles. In this case, one may consider using metals in the multilayer structure.

In an embodiment, the porous layer is diffusive and/or reflective with respect to incident visible light, providing a clear, bright, white and/or whitish overall appearance. Preferably, the porous layer is diffusive and/or reflective with respect to at least some but preferably all visible light. A clear, bright, white and/or whitish appearance is advantageous, for example, in display applications, where the appearance of the colored layer may contribute to the background of displayed information and/or images.

In other embodiments, where some visible light may be absorbed by the layer, the layer may also appear overall colored, exhibiting a distinctive color or a mixture of colors. As mentioned above, the color may originate from the particles themselves, from separate, colored particles, or from dyes that are added to the porous layer, for example dye molecules adsorbed on the porous layer.

In some aspects and embodiments, the invention provides devices comprising the porous layer. The devices may be selected from displays, screens, electronic devices, electric devices, electrochemical devices, photochemical devices, photoelectrochemical devices, optoelectronic devices, electrochromic devices, chromic devices, such as photochromic devices and photoelectrochromic devices, and devices pertaining to two or more of the precited device categories.

For example, the device may be a display based on an electrochromic device architecture. Furthermore, the display be an electronic device, if it uses electric power for operation.

In a preferred embodiment, the device is a layered device, preferably comprising two or more layers, which layers are preferably arranged in an overlapping manner.

In an embodiment, the device comprises a solvent. Preferably, the porous layer is provided in said solvent. The solvent may be part of a layer of a layered device, or may be considered as an own layer.

**Figure 7** illustrates an embodiment of a electrochemical device 200 comprising first and second main sides 91, 92. Preferably, the device comprises a front electrode 95 and a photosensitive back electrode 96. In the embodiment shown, the front electrode is closer to the first side and the back electrode is closer to the second side.

A solvent 90 is provided and preferably retained between the two electrodes. Furthermore, a porous layer 100 is provided between the electrodes and in contact with the solvent. In an embodiment, the solvent comprises redox species, which may undergo a redox reaction depending on the electric potential established between the electrodes.

In an embodiment, the solvent is an electrolyte.

Preferably, the porous layer is immersed in and/or surrounded by the solvent 90.

In an embodiment, the photosensitive electrode 96 may be activated, for example switched on or off, by illumination. In order to prevent ambient visible light from acting on the photosensitive electrode, the porous layer 100 is provided. Thanks to the transparency with respect to at least some IR light, IR light may be used for driving and/or controlling the photosensitive electrode 96, preferably from the first side 91. Preferably, IR light having a defined wavelength is used. Furthermore, thanks to the porosity of the porous layer, redox active materials contained in the solvent 90 may diffuse through the porous layer and between the electrodes. In some examples, the redox species may exhibit a color, and may become visible.

On or towards the second side 92, the device 200 may comprise a covering or protective paint (not shown) so as to protect the photosensitive electrode 96 from light, such as ambient light, that could otherwise enter the device from that side. Furthermore, in an embodiment, a color filter is provided associated with the first side 91, which color filter may reflect a particular color of the visible spectrum. The color filter may be used in combination with the porous layer 100 for preventing all visible light from passing from the front side 91 through the device to the photosensitive electrode.

In an embodiment, the porous layer is used to protect the photosensitive electrode 96 from light in visible spectrum and allowing light in near infrared spectrum be able to access the photosensitive electrode 96. At the same time, the porous layer 109 preferably provides a background of specific color, for example white. If electrode 95 is a color-changing electrode, for example an electrochromic electrode or a photoelectrochromic electrode, the color changing effect could be seen from the top side 91 without being blocked by the porous layer 109.

Instead of a photosensitive electrode, any light sensitive component and/or compound may be used in the device and may be protected from at least some visible light by the porous layer 100. For example, one or more chromic materials, e.g. selected from photochromic and photoelectrochromic materials, may be provided in the device, for example instead of electrode 96, with the porous layer 100 being provided so as to shield the light sensitive material from ambient visible light.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

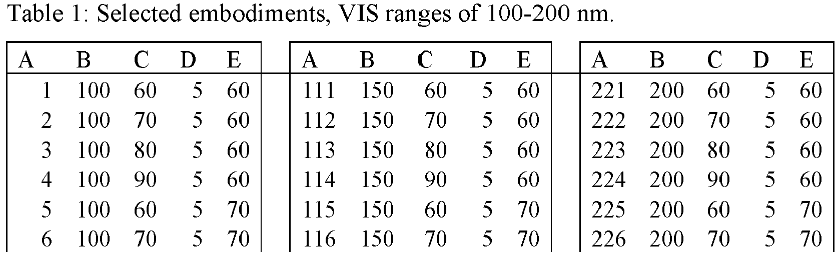

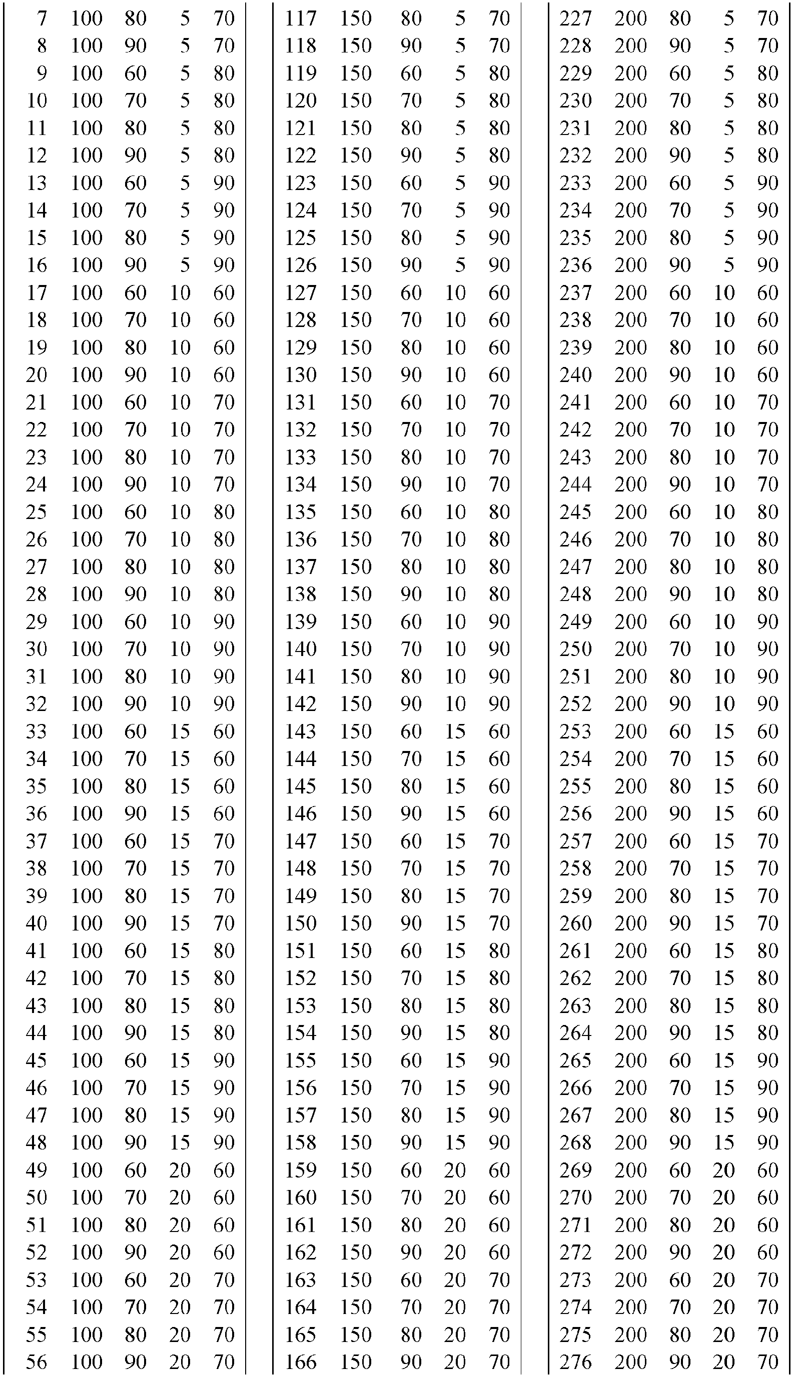

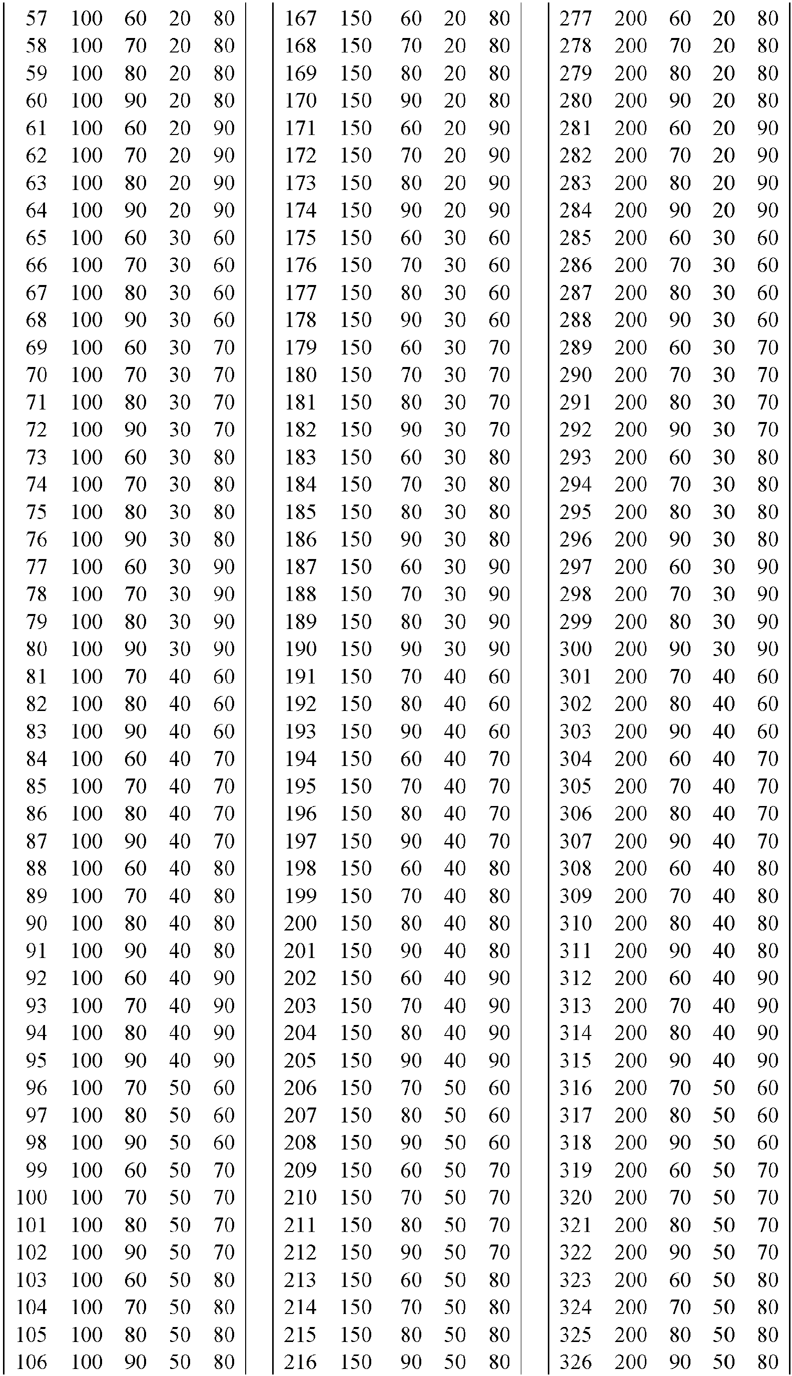

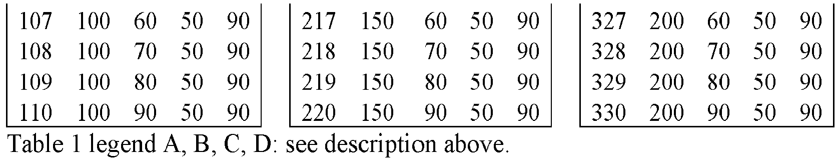

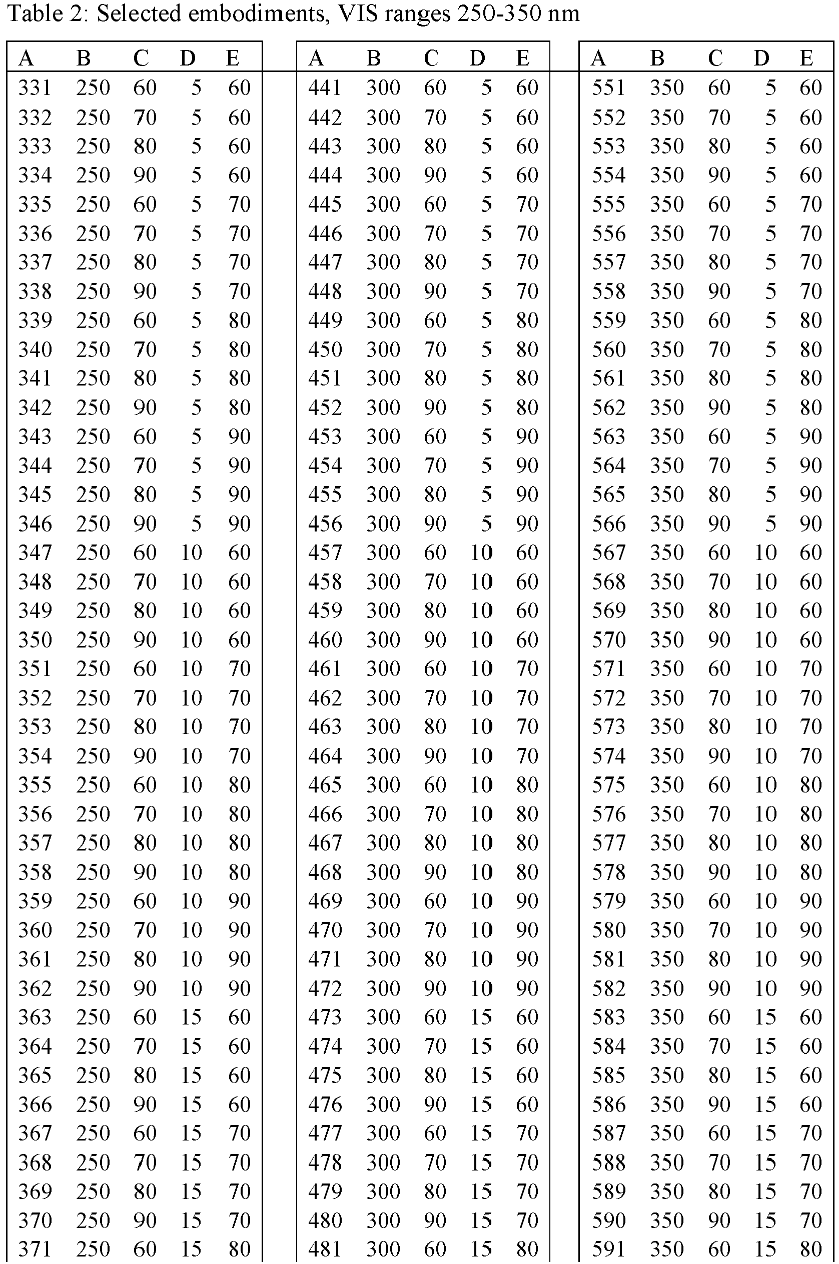

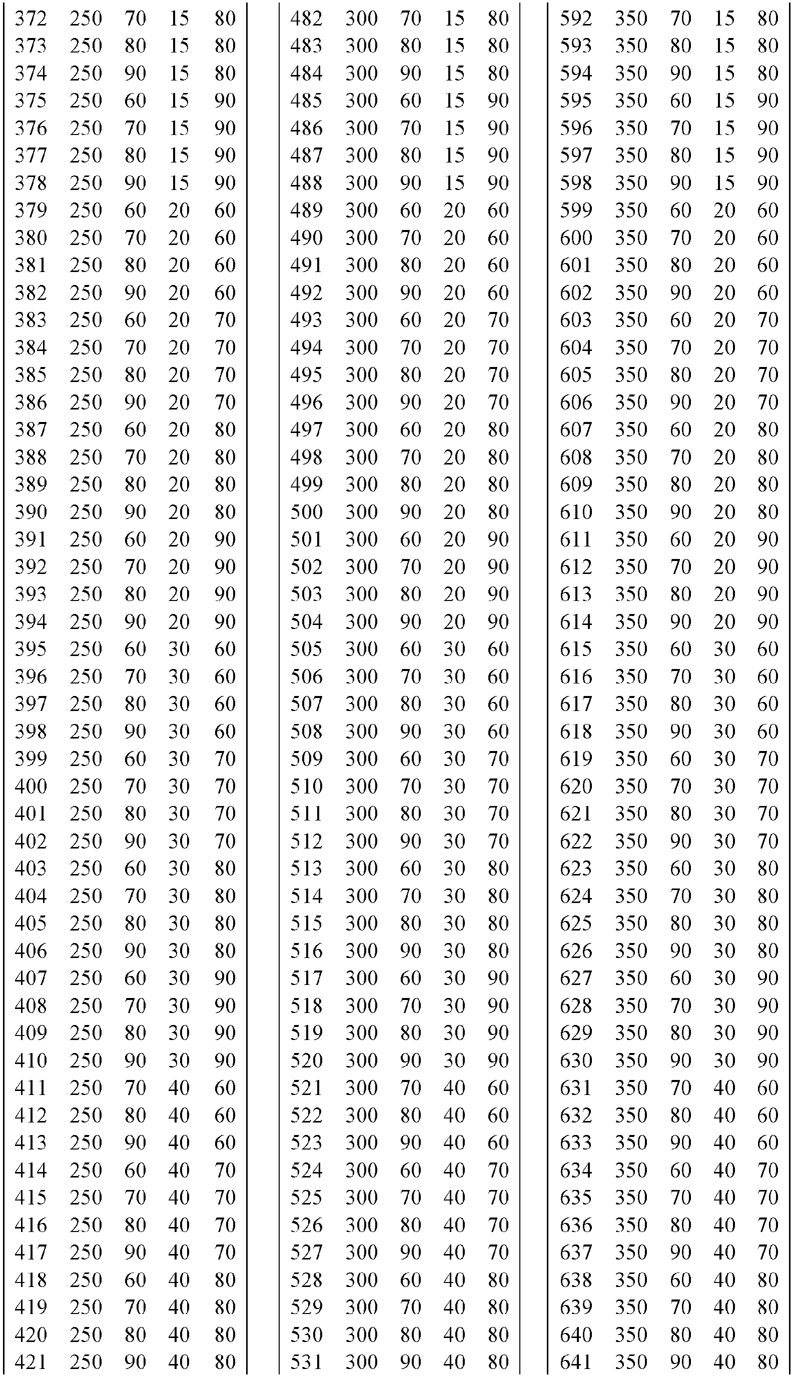

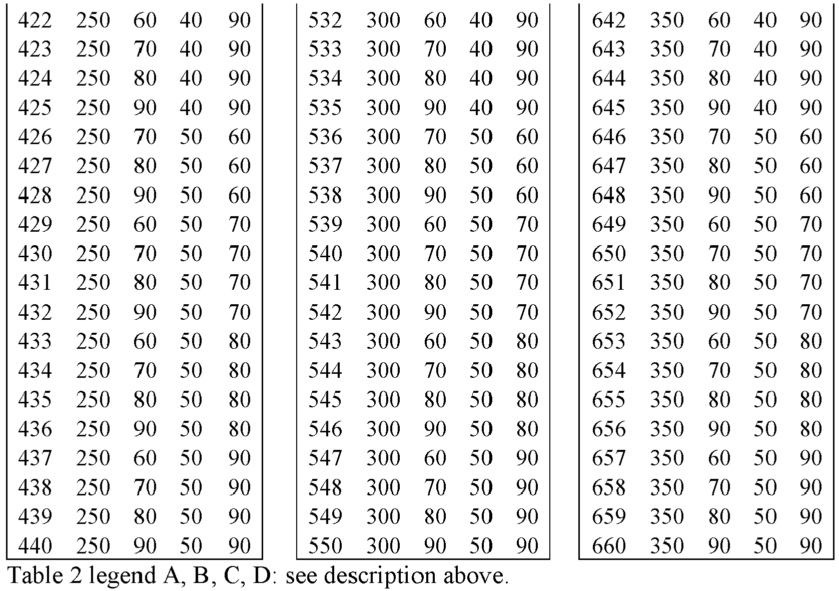

## Claims

1. A porous layer (100-104) that is selectively transparent to light in that,
- the porous layer prevents 60% or more of photons of light having a wavelength falling within a continuous range of at least 100 nm extending within the visible light spectrum from passing through the layer; and,
- the porous layer is transparent to at least 60% of the photons of light having a wavelength falling within a continuous range of at least 5 nm extending within the infrared (IR) light spectrum.

2. The porous layer of claim 1, wherein visible light is light having a wavelength of 350-750 nm, and IR light is light having a wavelength of 751-1'400 nm.

3. The porous layer of claim 1 or claim 2, which is permeable to one or more solvents, in particular polar solvents selected from one or more selected from the group of: water, propylene carbonate, ethylene carbonate, tetrahydrofuran, dioxane, dimethyl sulfoxide, dimethylformamide, acetonitrile, sulfolane, and γ-butyrolactone.

4. The porous layer of any one of the preceding claims, which has a thickness of 50 nm to 500 µm.

5. The porous layer (100-104) of any one of the preceding claims, which comprises one or both selected from:
- particles (20), preferably micro- and/or nanoparticles, more preferably sintered micro- and/or nanoparticles; and,
- a porous base layer (30) and a coating (28.3) provided on or around said porous base layer.

6. The porous layer of claim 5, which has a thickness that exceeds the diameter of the particles and/or which comprises particles that lie on top of each other and/or that are superimposed.

7. The porous layer of any one of claims 5-6, wherein one, several or all of said particles and/or said coated porous base layer exhibit the effect of a Bragg reflector and/or comprise a multilayer preferably enabling interference as a Bragg reflector.

8. The porous layer of any one of claims 5-7, wherein said particles and/or said coated porous base layer comprise a multilayer (28, 28.2, 28.3), said multilayer preferably comprising two or more layers and preferably three or more layers.

9. The porous layer of claim 8, wherein said multilayer comprises nanolayers, sublayers or individual layers (31-36) comprising or consisting essentially of materials having different refractive indexes.

10. The porous layer of any one of claims 7-9, wherein said multilayer comprises a first layer (31) comprising a first material having a first refractive index, a second layer (32) comprising a second material having a second refractive index, and at least a third layer (33) comprising said first material or a third material having a third refractive index, and optionally one or more additional layers, preferably provided such that an additional layer (x+1) has a closest inner neighbouring layer (x) that comprises a material having a refractive index that is different from the refractive index of the material of the additional layer (x+1).

11. The porous layer of any one of the preceding claims, comprising particles (20) each of which comprises a plurality of superimposed layers (31-36), wherein a given layer (32) of a particle has one, two or more closest neighboring layers (31, 33), and wherein a material of said given layer has a refractive index that is different from the refractive index of another material of at least one and possibly more of said one, two or more closest neighboring layers (31, 33).

12. The porous layer of any one of the preceding claims, comprising one or more selected from oxide, sulfide, fluoride, nitride, arsenide, selenide, bromide, chloride and iodide materials, and/or polymers, preferably selected from Ti, Si, Al, Ba, Ca, Cd, Ga, Ge, In, Li, Pb, Mg, Mo, Sn, Ta, Zn, Zr and W oxide, sulfide, fluoride, nitride, arsenide, selenide, bromide, chloride and iodide materials and/or and polymers, more preferably one or more selected from TiOz, SiOz, MgF₂, Ta₂O₅, ZnS, Al₂O₃, GeOz, HfOz, MgO, ZnO, MoO₃, WO₃, ZrOz, CaF₂, MgF₂, BaF₂, LiF, ZnS, SnS, CdS, PbS, MoS₂, GaAs, AlAs, Si₃N₄, InN, GaN, AlN, TiN, BN, and polymers.

13. An electronic device (200) comprising the porous layer (100-104) of any one of the preceding claims.

14. The device of claim 13, which is a device selected from the group consisting of electrochemical, optoelectronic, photochemical, photoelectrochemical devices, and from displays, and from devices belonging to two or more of the aforementioned device categories.

15. The device of claim 13 or 14, which comprises a solvent (90), wherein said porous layer is in contact with said solvent.

16. The device of any one of claims 13 to 15, which comprises a light-sensitive material (96) and/or a layer that is sensitive to visible and/or IR light.

17. The device of any one of claims 13-16, which has a main and/or front surface (91) which is transparent to visible and/or IR light, wherein said main and/or front surface is provided for allowing light to enter the device, wherein said porous layer (100-104) is provided between said main and/or front surface (91) and said light-sensitive material or layer (96).

18. The device of claim 16 or 17, wherein said light-sensitive material is a chromic material, preferably selected from photochromic and photoelectrochromic materials.

19. A display comprising the porous layer of any one of claims 1-12.

20. A porous layer (100-104) comprising particles (20) and/or a coated porous base layer (30), said porous layer (100-104) exhibiting Bragg reflector properties, in particular light interference.

21. A porous layer (100-104) comprising one or both selected from particles, preferably micro- and/or nanoparticles, and a coated porous base layer (30) each of said particles and/or said coated base layer comprising a multilayer (28, 28.2, 28.3), said multilayer (28) preferably comprising two or more individual layers, sublayers and/or nanolayers (31-35).
